# FASCICULE DE BREVET EUROPEEN

(11) **EP 2 855 062 B1**
(45) Date de publication et mention de la délivrance du brevet: **28.10.2020**
(21) Numéro de dépôt: 13733344.9
(22) Date de dépôt: 05.06.2013
(51) Int. Cl.: B23D 77/00, B23D 77/04

(54) **TETE DE CALIBRAGE POUR LE FORAGE D'ARBRES**
KALIBRIERUNGSKOPF ZUM BOHREN VON WELLEN
CALIBRATION HEAD FOR THE DRILLING OF SHAFTS

(30) Priorité: 05.06.2012 FR 1255195
(43) Date de publication de la demande: 08.04.2015
(73) Titulaire: Safran Aircraft Engines, 75015 Paris (FR)
(72) Inventeur: DEJAUNE, Claude , Gérard, René, F-77550 Moissy Cramayel Cedex (FR); LEHOUX, Gérard, F-77550 Moissy Cramayel Cedex (FR)
(74) Mandataire: Camus, Olivier Jean-Claude
(86) Numéro de dépôt international: PCT/FR2013/051276
(87) Numéro de publication internationale: WO 2013/182810

(56) Documents cités:
- WO-A2-98/39127
- FR-A1- 2 924 631
- US-A- 1 414 565
- US-A- 3 751 177
- US-A- 4 133 399
- US-A- 5 328 304

## Description

### DOMAINE

Le domaine de l'invention concerne les têtes de calibrage pour le forage des arbres, selon le préambule de la revendication 1, notamment pour le forage des arbres de turbines. En particulier, le domaine de l'invention traite de la structure d'une tête de calibrage adaptée pour assurer une meilleure rectitude, une plus grande stabilité ainsi qu'une plus grande précision d'alésage.

Une telle tête est connue du document US 1 414 565 A.

### ETAT DE L'ART

L'opération de calibrage des arbres de turbine est un procédé spécifique qui nécessite la prise en compte de contraintes en dimensionnel très restrictives telles que l'état de surface, la rectitude d'alésage avec une faible tolérance, de l'ordre de quelques centièmes de millimètre de manière à garantir un diamètre constant de l'arbre et notamment de la toile des arbres usinés et de la variation de la toile : le delta toile.

Une difficulté réside dans la réalisation d'un alésage lorsqu'il est réalisé en aveugle, c'est-à-dire en poussant à l'intérieur d'une pièce sur une grande longueur.

Généralement, l'opération de calibrage est réalisée sur une machine de forage avec une barre équipée d'une tête de calibrage à son extrémité. Cette opération conditionne celle de finition qui est réalisée par une forme type « bouteille » avec une tête de forage dite « recessing » selon la terminologie anglo-saxonne usuellement employée pour désigner le déploiement et la rétraction des outils.

Une tête de calibrage constitue une partie d'un outil de forage particulièrement sensible et devant être conçue pour répondre à de fortes contraintes de forage d'un arbre. Généralement, une tête de calibrage de la technique actuelle est équipée de plaquettes d'usinage ainsi que de patins de guidage disposés sur la surface externe de ladite tête. Les plaquettes d'usinages peuvent concerner des plaquettes d'ébauche et/ ou des plaquettes de finition.

La répartition des patins de guidage et les plaquettes d'usinage sur la surface de la tête et la précision de la position de leur réglage doit permettre d'assurer un guidage rectiligne lors du forage et de garantir un usinage en minimisant les défauts de surface pour respecter les contraintes dimensionnelles.

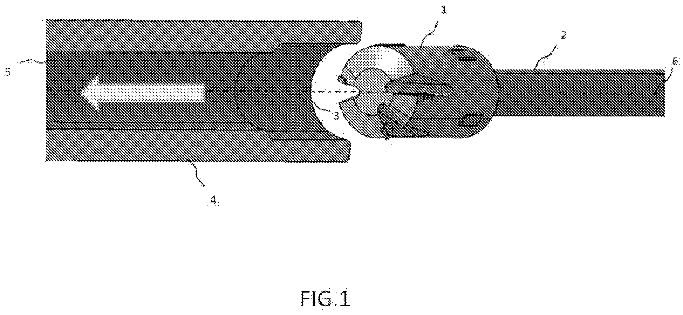

La figure 1 représente un exemple d'outil pour le forage d'un arbre 4. L'outil comprend un arbre de direction 2 et une tête de calibrage 1 fixée à l'une des extrémités de l'arbre de direction 2 ayant un axe de rotation 6. L'outil est préalablement inséré dans une cavité de l'arbre à forer pour un pré-calibrage.

L'arbre à forer est généralement percé préalablement lors d'une opération de pré-perçage de manière à retirer une grande partie de la matière de l'arbre à forer permettant de creuser une première cavité 5 et une seconde cavité 3 dans ledit arbre.

Les opérations de pré-perçage et de pré-calibrage permettent de préparer au mieux la phase de finition à partir d'un outil comprenant une tête de calibrage.

Il apparaît que le guidage par l'intermédiaire des deux patins situés sur l'avant de la tête de calibrage n'assurent pas une stabilité de la tête générant ainsi des vibrations avec pour conséquence une dégradation de l'état de surface. En outre, d'autres défauts peuvent apparaitre du fait d'une disposition des patins de guidage non optimisée. Notamment, parmi les dégradations pouvant survenir, on note des rayures, des défauts de concentricité et des défauts de surface écrouie.

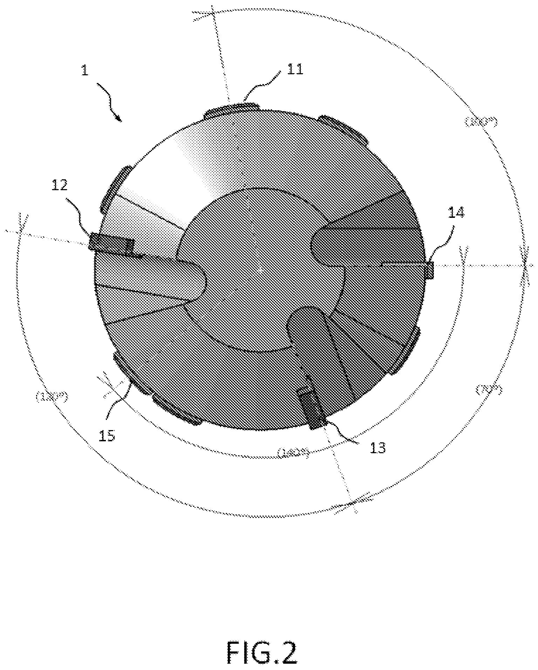

La figure 2 représente une vue de face d'une tête de calibrage de l'état de l'art sur laquelle est représentée deux plaquettes d'ébauches 12, 13 et une plaquette de finition 14 légèrement en retrait vis-à-vis de l'extrémité de la tête de calibrage 1. Les patins de guidage avant 11 et 15 sont représentés également, ces derniers étant disposés à l'avant de la tête de calibrage, c'est-à-dire dans la partie de la tête destinée à entrer la première dans la cavité intérieur de l'arbre à forer.

Deux patins arrière sont représentés également à proximité sans être référencés.

Néanmoins, actuellement, les têtes de calibrage présentent de nombreux inconvénients lorsqu'elles sont utilisées pour forer des arbres sur une grande distance.

Un premier problème des têtes de calibrage actuelles est qu'elles induisent une mauvaise répartition des efforts de coupe et de guidage. Le nombre de patins semble insuffisant, mais augmenter le nombre de patins pourrait induire une augmentation des frottements.

De ce fait des dégradations peuvent survenir rapidement sur la tête de calibrage elle-même et notamment sur les patins de guidage avant qui sont susceptibles de rompre.

Par ailleurs, un second problème des solutions actuelles concerne la grande difficulté de réglage des plaquettes d'ébauche et de finition et des patins de guidage.

En ce qui concerne les plaquettes d'ébauche et de finition, des écaillages sont susceptibles de survenir en périphérie du trou de vis de fixation. Ce phénomène est dû à un calage aléatoire car il n'y a pas de système de réglage suffisamment précis pour ce type de forage.

Par ailleurs, un troisième problème résulte de la position de l'angle de coupe des plaquettes de finition qui est généralement très faible. Les vibrations lors du forage peuvent être amplifiées si le réglage n'est pas ajusté en fonction de celui des plaquettes d'ébauche et si ce dernier n'est pas suffisamment précis. La répercussion des vibrations sur la stabilité de l'outil et de la tête de calibrage lors du forage peuvent conduire à des erreurs et des dégradations de la surface intérieure de l'arbre.

En conséquence, les têtes de calibrage de l'état de l'art comportent un certain nombre d'inconvénients qui ne permettent pas de forer des arbres en garantissant une précision du forage, une stabilité lors du forage et une rectitude de la direction de forage suffisantes. En outre, ces inconvénients concernent également les têtes elles-mêmes qui sont susceptibles de se dégrader.

Il est alors nécessaire de limiter les répercussions de ces contraintes par différentes actions comme par exemple le remplacement des pièces et des outils qui peuvent être très couteux.

En outre, le taux d'arbres forés et rejetés est important. Un problème réside dans le domaine des turbines notamment dans le secteur de l'aéronautique qui sont des pièces très cher, de grandes dimensions qui ne peuvent tolérer de trop grandes erreurs notamment dans l'usinage des pièces.

### RESUME DE L'INVENTION

L'invention permet de résoudre les inconvénients précités.

L'objet de l'invention est décrit dans la revendication 1 et Z concerne une tête de calibrage cylindrique pour le forage d'un arbre. La tête de calibrage de l'invention comporte trois rainures agencées régulièrement sur la circonférence de manière à être espacées deux à deux d'un angle de 120° vis-à-vis d'une rotation par rapport à l'axe de la tête de calibrage, les rainures permettant une évacuation des copeaux et le passage du lubrifiant lors du forage, chacune des rainures comportant une plaquette d'usinage dont la position est ajustée dans la rainure au moyen d'une cassette de réglage.

Selon l'invention, la tête de calibrage comprend au moins un patin de guidage avant disposé sur la surface externe de la tête dans une zone correspondant à l'extrémité avant de la tête, et une pluralité de patins de guidage arrière disposés sur la surface externe de ladite tête dans une seconde zone définissant la zone arrière de ladite tête, un parmi les patins de guidage arrière étant disposé derrière un parmi le ou chaque patin de guidage avant, dans le même axe que celui-ci, deux patins de guidage arrière parmi la pluralité de patins de guidage arrière étant agencés symétriquement l'un par rapport à l'autre par rapport à l'axe de la tête.

Avantageusement, la tête de calibrage comporte trois patins de guidage avant disposés dans une zone définissant une extrémité avant de la tête de calibrage, les trois patins étant agencés régulièrement sur la surface externe de la tête de manière à être espacés deux à deux d'un angle de 120° vis-à-vis d'une rotation par rapport à l'axe de la tête de calibrage.

Avantageusement, les positions sur la surface externe de la tête de calibrage des patins de guidage avant et des rainures sont alternées de manière à ce que l'angle entre chaque patin de guidage avant succédant à une rainure selon la circonférence de la tête de calibrage forme un angle de 60° vis-à-vis d'une rotation par rapport à l'axe de la tête de calibrage. La pluralité de patins peut correspondre à quatre patins arrière.

Avantageusement, deux patins de guidage arrière supplémentaires sont situés chacun derrière un patin avant.

Par exemple, la tête de calibrage peut comporter un ensemble de patins de guidage, dont l'agencement sur la surface externe de la tête, leur nombre et leur hauteur assurent le passage d'un débit de lubrifiant minimal tout en minimisant les frottements.

Avantageusement, une rainure comporte une plaquette de finition et que deux rainures comportent chacune une plaquette d'ébauche.

Selon un mode de réalisation, l'un des deux patins arrières qui sont positionnés en symétrie par rapport à l'axe de la tête, est positionné à 30° par rapport à la plaquette d'ébauche ou une plaquette de finition.

Avantageusement, l'évasement de chaque rainure est sensiblement proche d'un angle de 25° à 10% près.

Par exemple, les rainures peuvent être dimensionnées pour permettre l'injection d'un débit de 380L/min de lubrifiant à 15% près pour une pression de 15 bar de la tête de calibration dans l'arbre à forer à 15% près.

Avantageusement, la longueur des rainures selon l'axe de la tête de calibration est supérieure à 50% de la longueur de la tête de calibration.

Avantageusement, chaque plaquette d'usinage comporte trois arêtes pouvant être configurées de manière à sélectionner une arête de travail au moyen de la cassette de réglage.

### BREVES DESCRIPTION DES FIGURES

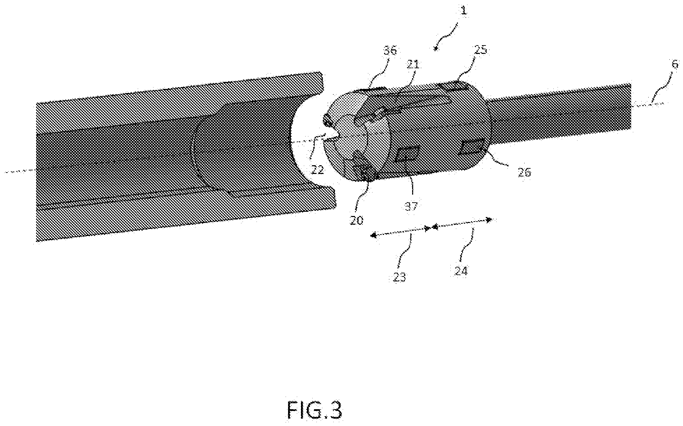

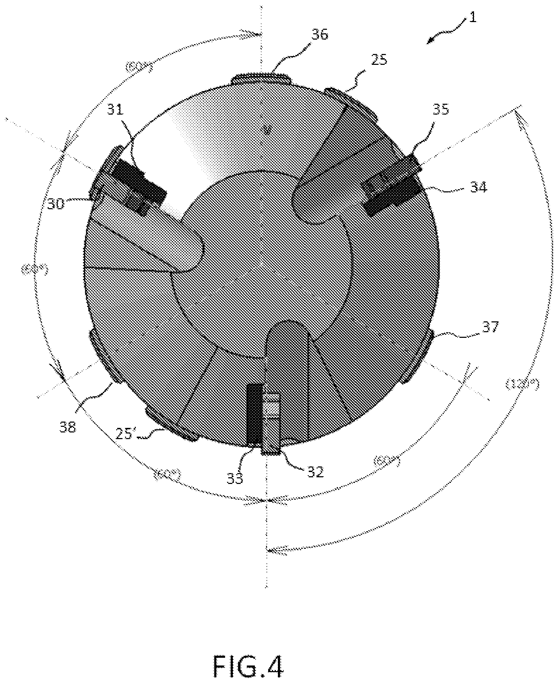

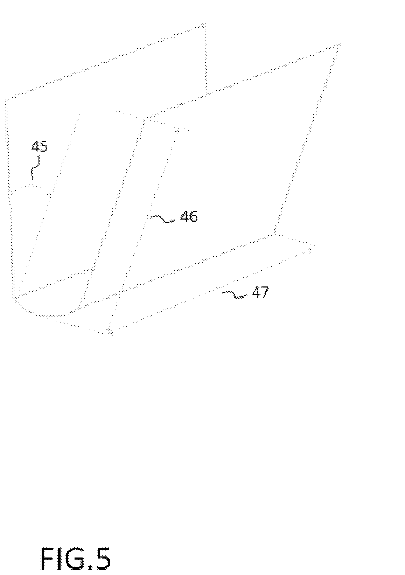

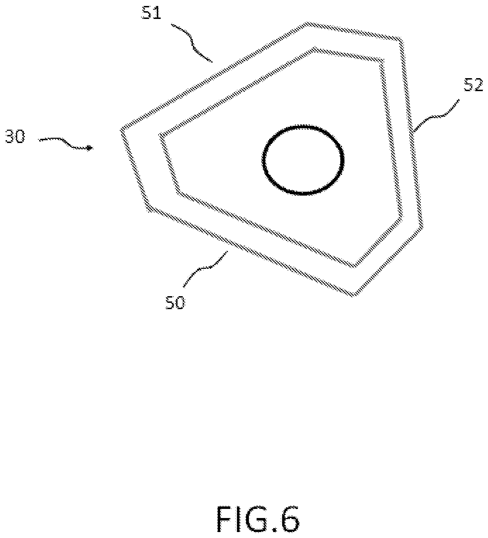

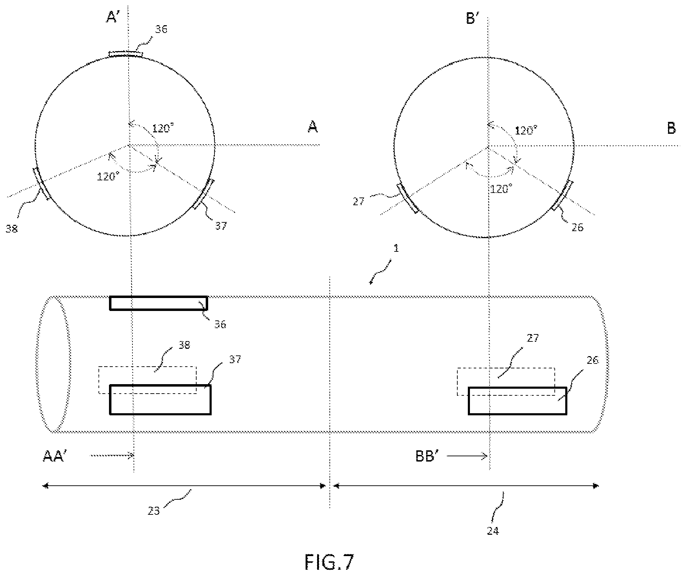

D'autres caractéristiques et avantages de l'invention ressortiront à la lecture de la description détaillée qui suit, en référence aux figures annexées, qui illustrent :
▪ figure 1 : un outil de forage comprenant une tête de calibrage de l'art antérieur ;
▪ figure 2 : une vue de face d'une tête de calibrage comprenant des plaquettes d'usinage ainsi que des patins de guidage ;
▪ figure 3 : un outil de forage comprenant une tête de calibrage conformément à l'invention ;
▪ figure 4 : une vue de face d'une tête de calibrage conformément à l'invention ;
▪ figure 5 : une perspective d'une rainure d'une tête de calibrage de l'invention ;
▪ figure 6 : une plaquette débauche d'une tête de calibrage de l'invention ;
▪ figure 7 : des vues en coupe de la zone avant et arrière d'une tête de calibrage qui ne correspond pas à l'invention.

### DESCRIPTION

Dans la suite de la description on entend par « rectitude du forage », la direction rectiligne et fixe du forage d'un arbre. La capacité à forer de manière rectiligne dans une direction fixe, notamment dans un arbre, entraine le respect de l'exigence de rectitude.

Dans la suite de la description, on considère une forme générale de la tête de calibrage comme sensiblement cylindrique. Le cylindre moyen comporte un axe central qui correspond à l'axe 6 de la tête de calibrage.

Dans la suite de la description, on nomme « une toile », l'épaisseur entre le diamètre intérieur et le diamètre extérieur. Le « delta toile » correspond alors à la variation de cette épaisseur de toile.

Une tête de calibrage conformément à l'invention propose un agencement des plaquettes d'usinage sur la surface externe de la tête de calibrage de manière à éviter tout déséquilibrage de la tête lors du forage.

On appelle un « agencement régulier » des plaquettes ou des rainures, un agencement de ces dernières tel qu'il permet de confonde le barycentre géométrique de la tête de calibrage avec le centre de gravité de cette dernière, ou sensiblement proche. Un agencement régulier des plaquettes ou des rainures sur la tête de calibrage peut être considéré soit : en prenant en compte la disposition des patins, soit sans les prendre en compte.

Notamment, lorsque le nombre de patins répartis sur la surface de la tête, à une position de l'axe de la tête donné, n'est pas un multiple du nombre de rainures ou de plaquettes d'usinage, alors l'agencement régulier des rainures ou des plaquettes sur la tête ne prend pas en compte la répartition, le nombre et l'agencement des patins de guidage.

Une répartition adaptée des plaquettes d'usinage permet d'assurer une rectitude de forage, un écoulement souhaité du lubrifiant jusqu'à l'extrémité de la tête et une évacuation suffisante des copeaux découpés de matière. Enfin, l'équilibrage entre une pression de forage adaptée et un débit nécessaire de lubrifiant est amélioré.

La figure 3 représente une tête de calibrage 1 conformément à l'invention. Cette dernière comprend trois rainures 20, 21, 22 qui sont également visibles sur la vue de face de la tête de la figure 4. Les rainures sont préférentiellement sensiblement identiques géométriquement.

La tête de calibrage de l'invention comprend trois rainures usinées à l'extrémité de la tête de calibrage et s'étendant le long de la tête selon la direction de l'axe de rotation 6 vers l'arrière de la tête. Les rainures sont usinées de telle manière qu'elles sont réparties à équidistance les unes des autres sur la circonférence de ladite tête. Les trois rainures forment dans le plan normal à l'axe 6 un triangle équilatéral lorsque l'on considère trois points pris chacun à la même position de chacune rainure.

La répartition axiale est également symétrique, les trois rainures ont des longueurs et profondeurs sensiblement identiques.

La tête de calibrage a donc un poids répartis symétriquement qui permet de définir un barycentre ayant des propriétés de symétrie circulaire autour de l'axe 6.

Dans une configuration de symétrie axiale, les rainures sont situées à 120° l'une de l'autre en considérant l'axe 6 de la tête comme référence d'axe de symétrie.

Dans cette configuration, les plaquettes d'usinage, dont les plaquettes d'ébauche et de finition, sont agencées de manière à être maintenues dans chacune des rainures. Ils sont maintenues préférentiellement sur le même coté de chacune des rainures auxquels ils sont associés. Cette configuration permet de respecter une homogénéité de symétrie de la tête et d'une bonne répartition du poids. Le barycentre géométrique de la tête de calibrage correspond sensiblement à son centre de gravité.

Des moyens de fixation et de réglage sont présents de manière à fixer solidement les plaquettes tout en permettant une solution de démontage simple permettant : soit de remplacer une plaquette, soit de modifier son orientation pour changer l'arête de coupe.

Selon l'invention, les moyens de fixation et de réglage sont des cassettes de réglage permettant d'ajuster la position de la plaquette d'usinage dans la rainure, et permettant avantageusement un réglage fin de l'angle de coupe de l'arête et de la hauteur dépassant de la rainure. En outre, les cassettes de réglage permettent de servir de support pour le maintien des plaquettes d'usinage 30, 32, 35. La figure 4 représente les cassettes de réglage 31, 33, 34 qui maintiennent les plaquettes dans les rainures.

Selon une configuration de la tête de calibrage pour augmenter l'efficacité de la découpe de l'arbre à forer, l'angle d'attaque d'une plaquette d'ébauche ou de finition peut être important, par exemple supérieur à 20° par rapport à l'axe d'un rayon de l'axe 6 de la tête.

L'utilisation des cassettes de réglage permet de contribuer à maintenir un effort constant de découpe pendant toute la durée du forage.

La tête de calibrage de l'invention comprend également des patins de guidage. Parmi l'ensemble des patins de guidage, la tête de calibrage comprend trois patins avant présents sur la surface externe de la tête dans une zone correspondant à l'extrémité avant de la tête.

Les patins sont présents sur la surface externe de la tête et ont une épaisseur de l'ordre de 1 à 2mm. Dans un mode préférentiel les patins ont une épaisseur de 1mm. Cette hauteur de 1mm à 30% près est particulièrement avantageusement pour limiter les frottements tout en assurant un débit de lubrifiant circulant autour de la surface externe de la tête de calibrage.

Avantageusement, les trois patins de guidage avant 36, 37, 38 sont répartis sur la circonférence de la surface externe de la tête selon une répartition équilibrée. Les patins de guidage avant sont alors agencés de manière être espacés d'un angle de 120° les uns des autres vis-à-vis de l'axe central 6 de la tête de calibrage. Ils forment également dans un plan normal à l'axe 6 un triangle isocèle entre eux. Chaque patin de guidage avant est équidistant des autres patins de guidage avant.

Ainsi les trois patins équilibrent le poids de la tête de calibrage et les forces qui s'appliquent à elle lors de sa rotation.

Dans un mode amélioré de l'invention, les trois patins avant et les trois rainures sont répartis alternativement et se succèdent sur la circonférence de la tête en suivant un sens de rotation autour de l'axe 6. Une rainure succédant à un patin de guidage selon la circonférence de la tête de calibrage forme avec ledit patin un angle sensiblement proche de 60° selon une rotation ayant pour axe : l'axe 6 de la tête.

Ainsi la tête de calibrage présente un agencement sur son extrémité avant et au niveau de sa surface externe des rainures et des patins de guidage avant permettant une répartition équilibrée de son poids évitant la génération de vibrations lors du forage.

La position des deux plaquettes d'ébauche doit permettre un équilibrage des efforts de coupe et donc être agencées de manière à répartir le poids sur la tête de manière équilibrée avec la plaquette de finition et les patins de guidage. Les plaquettes d'usinage sont situées à une position angulaire de120° les unes de l'autres puisque maintenues dans les rainures de la tête. Elles sont agencées de manière alternées avec la position circonférentielle des patins de guidage avant qui sont eux-mêmes espacés de 120°.

En prenant comme référence la plaquette de finition en position basse pour un angle de 0° dans un plan de coupe perpendiculaire à l'axe 6 de la tête, la tête de calibrage conformément à l'invention permet une répartition en alternance tous les 60° d'un patin de guidage avant et d'une plaquette d'ébauche. Cet agencement constitue une parfaite répartition des trois patins et des trois plaquettes d'usinage.

Dans un mode de réalisation, chaque plaquette d'usinage située dans le plan intérieur d'une rainure est maintenue dans son plan par une cassette de régalage comprenant des moyens de fixation. Selon l'axe 6 de la tête, les arêtes de travail de chacune des deux plaquettes d'ébauche sont situées à la même distance de l'extrémité de la tête. En revanche, l'arête de travail de la plaquette de finition est légèrement en retrait à une distance de quelques millimètres des arêtes de travail des plaquettes d'ébauche. Dans un mode préféré de l'invention, la distance entre l'arête de travail de la plaquette de finition et une arête de travail d'une plaquette d'ébauche est sensiblement d'une valeur de 8mm.

On appelle « arête de travail » l'arête positionnée de telle manière à ce qu'elle soit en contact de la matière à enlever dans l'arbre à forer.

La position et l'angle des plaquettes d'usinage peuvent être ajustés de manière à assurer :
- une rectitude ne dépassant pas 0,01 mm de variation par rapport à un axe de référence et ;
- un diamètre usiné ne dépassant pas une variation de 0,02 mm.

Ces deux derniers paramètres permettent de garantir un delta toile sensiblement constant dans une tolérance acceptable pour ne pas rebuter la pièce usinée.

La tête de calibrage comprend des rainures dont la géométrie permet d'accroitre la stabilité de la tête et d'améliorer le rapport pression de forage sur le débit nécessaire de lubrifiant à injecter à l'extrémité de la tête pendant le forage.

Notamment, l'augmentation de la section de la rainure permet d'amener un débit de lubrifiant à son extrémité avant plus facilement. Le débit est mieux régulé et peut acheminer un lubrifiant de manière constante et régulière pendant toute la durée du forage. Une forme spécifique optimisée par une forme en « entonnoir » permet d'assurer un meilleur refroidissement, notamment des plaquettes d'usinage, et d'éviter un bourrage lors du forage par les copeaux.

En effet, la rainure est plus large au niveau de la circonférence de la tête de calibrage qu'en profondeur, la profondeur de la rainure étant parallèle à l'axe 6 de la tête et située au plus proche dudit axe 6 de la tête. La figure 5 représente une vue en perspective où la profondeur 46 est représentée ainsi que l'évasement correspondant à un angle 45 permettant de faciliter l'évacuation des copeaux et la répartition du lubrifiant.

Dans une variante de réalisation, la profondeur peut varier tout au long de la longueur de la rainure par exemple en diminuant régulièrement. Ainsi la profondeur 46 peut diminuer à mesure que la rainure s'étend vers l'arrière de la tête 1 de calibrage pour améliorer notamment l'efficacité de l'acheminement du lubrifiant vers l'avant de la tête. Selon des exemples de réalisations, l'angle moyen d'évasement 45 est compris entre 10° et 35°. Selon un exemple de réalisation qui peut se combiner avec ce dernier mode, la variation de la profondeur 46 le long de la rainure peut varier de 5 à 30% de la profondeur maximale.

Ainsi les copeaux sont acheminés vers l'arrière de la tête de calibrage après leur découpe dans l'arbre. La tête de calibrage permet ainsi d'éviter des configurations de bourrage. En outre, le lubrifiant s'écoule naturellement vers l'avant et sous l'effet de la force centrifuge, il est ramené vers les bords extérieurs de la tête de calibrage 1.

Les trois rainures ont des formes identiques. La figure 5 représente une vue simplifiée en perspective d'une rainure de la tête de calibrage de l'invention. Chacune des rainures comporte une longueur 47 dépassant de la moitié 23 de la longueur de la tête 1 de calibrage. En revanche, ils ne s'étendent que sensiblement jusqu'à la moitié de la seconde moitié 24 de la longueur de la tête de calibrage. Cette caractéristique contribue à améliorer le rapport entre la pression exercé par la tête dans l'arbre à forer et le débit de lubrifiant pouvant être acheminé à l'avant de la tête. Les rainures facilitent la lubrification et permettent d'assurer la durée de vie de l'outil et l'évacuation des copeaux.

Le débit d'acheminement du lubrifiant peut être supérieur à 350 L par minute et se maintenir à des débits de l'ordre de 420 L par minute tout en maintenant une pression de forage de l'ordre de 15 bars.

Une tête de calibrage de l'invention permet de garantir un débit de lubrifiant s'écoulant autour de 380 L par minute à 20% près pour une pression de 15 bars à 20% près.

L'évasement des rainures en périphérie de la tête permet de faciliter le réglage et la mise en place des trois cassettes permettant de supporter et de maintenir chaque plaquette d'usinage.

La répartition en circonférentiel et axial des trois plaquettes d'usinage et des trois patins de guidage permet d'accroitre la stabilité de l'usinage sur la longueur de la tête. Cet effet permet de supprimer et/ou diminuer les vibrations.

Dans un mode de réalisation, la plaquette de finition comporte un appendice permettant de la positionner en position basse dans la cavité précalibrée de l'arbre, voir portion 3 de la figure 1. Avantageusement, à partir d'un détrompeur positionné dans la cavité 3 de pré-calibrage de l'arbre, la plaquette de finition est préférentiellement disposée de manière à permettre une insertion de la tête de calibrage de manière symétrique. Cette configuration de départ permet d'améliorer le placement de l'outil et assure une meilleure rectitude et une diminution des vibrations lors du forage.

La tête de calibrage de l'invention comporte en outre des patins de guidage arrière, référencés 25, 26, 25' pour les patins visibles sur la figure 3 et de la figure 4, positionnés à l'arrière de ladite tête. Les patins de guidage arrière ont pour fonction de maintenir le guidage pendant le forage. Ils permettent d'améliorer la rectitude du forage. Ils permettent également d'absorber une partie des vibrations et permettent de maintenir en ligne l'extrémité avant de la tête de calibrage. Enfin, les patins de guidage avant et arrière réduisent les frottements et améliorent la pression de forage.

Selon un mode de réalisation la tête de calibrage conformément à l'invention comporte quatre patins de guidage agencés à l'arrière de la tête tel que représentés à la figure 3.

Une répartition avantageuse est la suivante :
- des premier et second patins de guidage arrière sont respectivement disposés dans le même axe qu'un patin de guidage avant, un angle de 120° séparent les axes ces premier et second patins de guidage arrière ; de manière préférentielle les deux patins de guidage avant et les deux patins de guidage arrière encadrent le rainure dans laquelle la plaquette de finition est maintenue ;
- les deux autres patins de guidage arrière sont disposés symétriquement sur la circonférence de la tête de calibrage et à la même longueur de l'axe de ladite tête.

La tête de calibrage conformément à l'invention permet de conserver un bon état de surface. En outre, la vitesse de coupe est améliorée permettant des vitesses de l'ordre de 0,25 mm par tour. Un gain de temps non négligeable peut être obtenu lors de l'usinage d'un arbre à forer.

Une tête de calibrage est particulièrement efficace pour forer des arbres de grandes dimensions comprenant par exemple un diamètre important de l'ordre de 60 à 120mm.

En outre, des plaquettes d'ébauche et de finition peuvent être fixées à la tête de calibrage. La figure 6 représente un exemple de profil 30 de plaquette d'ébauche. Cette dernière peut être de même nuance de matière que la plaquette de finition, c'est-à-dire de même composition métallurgique, seul le profil des plaquettes étant modifié entre les plaquettes de finition et d'ébauche. Un profil particulièrement avantageux est un profil comportant trois arêtes 50, 51, 52 de coupe permettant d'usiner plusieurs pièces sans remplacer la plaquette. Il suffit lorsqu'une arête est usée ou abîmée de retourner la plaquette d'usinage et de la replacer dans la cassette de réglage.

La figure 7 représente un mode de réalisation qui ne correspond pas à l'invention, représentant des patins de guidage arrière positionnés derrière des patins de guidage avant dans un même alignement par rapport à la direction axiale 6 de la tête 1. Cette figure permet de préciser le mode de réalisation énoncé précédemment au regard de la figure 3.

Une vue simplifiée de le tête de calibrage 1 est représentée sans les rainures et sans les plaquettes d'usinage. Deux coupes sont représentées respectivement une première coupe AA' de la zone 23 définissant une extrémité avant de la tête de calibrage 1 et une seconde coupe BB' de la zone 24 définissant une extrémité arrière de la tête de calibrage 1. Les zones sont représentées comme dans la figure 3 de sorte à sensiblement couvrir une moitié de longueur de la tête 1 de calibrage.

Dans la coupe AA' située dans la zone 23, les patins avant 37 et 38sont espacés circonférentiellement d'un angle sensiblement égal à 120°. Dans la coupe BB' située dans la zone 24, les patins arrières 26 et 27 sont également espacés circonférentiellement d'un angle sensiblement égal à 120°. Le patin avant 37 et le patin arrière 26 sont situés dans un même alignement l'un derrière l'autre. On précise que l'alignement des patins est parallèle à l'axe 6 de la tête 1. De la même façon, le patin avant 38 et le patin arrière 27 sont situés dans un même alignement l'un derrière l'autre et disposés en surface de la tête 1.

Cette disposition est identique à celle de la figure 3, en revanche cette dernière figure ne permettait pas de représenter cet alignement en ce qui concerne les patins 38 et 27.

Un effet technique de cette configuration permet d'améliorer le guidage de la tête de calibrage dans toute sa longueur lors d'un forage notamment lors de l'insertion de la tête dans la zone à forer.

Un avantage vis-à-vis d'une configuration dans laquelle un unique patin s'étend sur toute la longueur de la tête est un gain de masse et une précision accrue dans le mode de fabrication de la tête.

Dans le mode de réalisation de la figure 3 et de la figure 7, les deux patins avant sont espacés circonférentiellement d'un angle de 120°, ce qui permet un positionnement précis de la tête dans la zone à forer.

Selon une variante de réalisation, seul un patin avant par exemple le patin 37 peut être disposé sur la surface de la tête dans la zone 23. Ce dernier est alors aligné avec un patin arrière 26. Selon ce mode de réalisation, un unique patin avant et un unique patin arrière aligné avec le patin avant peut être défini.

Cette configuration n'utilisant que deux patins alignés à l'avant et à l'arrière peut être combinée avec d'autres patins avant non obligatoirement alignés avec d'autres patins arrières tels que ceux représentés à la figure 4 : les patins avant 25 et 25'.

Selon l'invention, le patin arrière 25' de la figure 4 est combiné à un second patin arrière 25 disposé symétriquement, c'est-à-dire diamétralement opposé sur l'arrière de la tête de calibrage 1. Cette disposition permet une optimisation de l'équilibrage des patins avant ajoutés à cette configuration et de la disposition des rainures.

Le patin 25'est disposé de façon idéale à une proximité angulaire de la plaquette d'ébauche 30 ou 35 ou de finition 32, sensiblement à 30° sens horaire comme représenté sur la figure 4. Cette disposition permet de maintenir en position la tête qui, sous son poids fléchirait lorsqu'elle est à l'arrêt et pour éviter, en conséquence, une rayure axiale en sortant la tête notamment lorsque la tête est à l'arrêt.

Selon un exemple, le patin 25' est disposé angulairement à sensiblement 30° par rapport à la plaquette de finition 32 lorsque l'on tourne dans le sens horaire selon la figure 4, pour éviter la sortie du lubrifiant de la rainure 20.

## Revendications

1. Tête de calibrage (1) cylindrique pour le forage d'un arbre (4), la tête de calibrage comportant trois rainures (20, 21, 22) s'étendant dans la direction de l'axe de ladite tête et agencées régulièrement sur la circonférence de manière à être espacées deux à deux d'un angle de 120° vis-à-vis d'une rotation par rapport à l'axe (6) de la tête de calibrage (1), les rainures permettant une évacuation des copeaux et le passage du lubrifiant lors du forage, chacune des rainures comportant une plaquette d'usinage, la tête comprenant au moins un patin de guidage avant (36,37,38) disposé sur la surface externe de la tête dans une zone (23) correspondant à l'extrémité avant de la tête (1), et une pluralité de patins de guidage arrière (25, 26, 27, 25') disposés sur la surface externe de ladite tête (1) dans une seconde zone (24) définissant la zone arrière de ladite tête, un (26) parmi les patins de guidage arrière étant disposé derrière un (37) parmi le ou chaque patin de guidage avant, dans le même axe que celui-ci, la tête étant **caractérisée en ce que** la position de chaque plaquette d'usinage est ajustée dans la rainure au moyen d'une cassette de réglage, et **en ce que** deux patins de guidage arrière (25, 25') parmi la pluralité de patins de guidage arrière (25, 26, 27, 25') sont agencés symétriquement l'un par rapport à l'autre par rapport à l'axe (6) de la tête (1).

2. Tête de calibrage (1) cylindrique pour le forage d'un arbre (4) selon la revendication 1, **caractérisée en ce qu'**elle comporte trois patins de guidage avant disposés dans une zone (23) définissant une extrémité avant de la tête de calibrage, les trois patins avant (36, 37, 38) étant agencés régulièrement sur la surface externe de la tête (1) de manière à être espacés deux à deux d'un angle de 120° vis-à-vis d'une rotation par rapport à l'axe (6) de la tête de calibrage (1).

3. Tête de calibrage cylindrique pour le forage d'un arbre (4) selon la revendication 2, **caractérisée en ce que** les positions sur la surface externe de la tête de calibrage (1) des patins de guidage avant (36, 37, 38) et des rainures (20, 21, 22) sont alternées de manière à ce que l'angle entre chaque patin de guidage avant (36, 37, 38) succédant à une rainure selon la circonférence de la tête de calibrage forme un angle de 60° vis-à-vis d'une rotation par rapport à l'axe (6) de la tête de calibrage (1).

4. Tête de calibrage (1) cylindrique pour le forage d'un arbre (4) selon l'une quelconque des revendications 1 à 3, **caractérisée en ce qu'**au moins un patin de guidage arrière supplémentaire (27) est décalé axialement par rapport à un patin de guidage avant (38).

5. Tête de calibrage (1) cylindrique pour le forage d'un arbre (4) selon l'une quelconque des revendications 1 à 4, **caractérisée en ce qu'**elle comporte quatre patins de guidage arrière (25, 26, 27, 25') disposés sur la surface externe de ladite tête (1) dans une seconde zone (24) définissant la zone arrière de la tête, deux autres patins de guidage arrière (26) étant situés chacun derrière un patin de guidage avant.

6. Tête de calibrage cylindrique pour le forage d'un arbre (4) selon l'une quelconque des revendications 1 à 5, **caractérisée en ce qu'**une rainure comporte une plaquette de finition et que deux rainures comportent chacune une plaquette d'ébauche.

7. Tête de calibrage cylindrique pour le forage d'un arbre (4) selon la revendication 6, **caractérisée en ce que** l'un des deux patins de guidage arrière (25, 25') positionnés en symétrie par rapport à l'axe (6) de la tête (1) est positionné à 30° par rapport à la plaquette d'ébauche (30, 35) ou une plaquette de finition (32).

8. Tête de calibrage cylindrique pour le forage d'un arbre (4) selon l'une quelconque des revendications 1 à 7, **caractérisée en ce que** l'évasement de chaque rainure est sensiblement proche d'un angle de 25° à 10% près.

9. Tête de calibrage cylindrique pour le forage d'un arbre (4) selon l'une quelconque des revendications 1 à 8, **caractérisée en ce que** la longueur des rainures selon l'axe de la tête de calibration est supérieure à 50% de la longueur de la tête de calibration.

10. Tête de calibrage cylindrique pour le forage d'un arbre (4) selon l'une quelconque des revendications 1 à 9, **caractérisée en ce que** chaque plaquette d'usinage comporte trois arêtes pouvant être configurées de manière à sélectionner une arête de travail au moyen de la cassette de réglage.

## Patentansprüche

1. Zylindrischer Kalibrierungskopf (1) für das Bohren einer Welle (4), wobei der Kalibrierungskopf drei Nuten (20, 21, 22) aufweist, die sich in Richtung der Achse des Kopfs erstrecken und regelmäßig auf dem Umfang derart eingerichtet sind, dass sie zu zweit in einem Winkel von 120° gegenüber einer Rotation in Bezug auf die Achse (6) des Kalibrierungskopfs (1) beabstandet sind, wobei die Nuten eine Ableitung der Späne und den Durchgang des Schmiermittels beim Bohren erlauben, wobei jede der Nuten eine Bearbeitungsplatte aufweist, wobei der Kopf mindestens eine vordere Führungskufe (36, 37, 38) umfasst, die auf der Außenfläche des Kopfs in einer Zone (23) angeordnet ist, die dem vorderen Ende des Kopfs (1) entspricht, und eine Vielzahl hinterer Führungskufen (25, 26, 27, 25'), die auf der Außenfläche des Kopfs (1) in einer zweiten Zone (24) angeordnet sind, die die hintere Zone des Kopfs definiert, wobei eine (26) von den hinteren Führungskufen hinter einer (37) von der oder jeder vorderen Führungskufe angeordnet ist, in derselben Achse wie diese, wobei der Kopf **dadurch gekennzeichnet ist, dass** die Position jeder Bearbeitungsplatte in der Nut mittels einer Einstellkassette ausgerichtet ist, und das zwei hintere Führungskufen (25, 25') von der Vielzahl hinterer Führungskufen (25, 26, 27, 25') symmetrisch zueinander in Bezug auf die Achse (6) des Kopfs (1) eingerichtet sind.

2. Zylindrischer Kalibrierungskopf (1) für das Bohren einer Welle (4) nach Anspruch 1, **dadurch gekennzeichnet, dass** er drei vordere Führungskufen aufweist, die in einer Zone (23) angeordnet sind, die ein vorderes Ende des Kalibrierungskopfs definiert, wobei die drei vorderen Kufen (36, 37, 38) regelmäßig auf der Außenfläche des Kopfs (1) derart angeordnet sind, dass sie zu zweit in einem Winkel von 120° gegenüber einer Rotation in Bezug auf die Achse (6) des Kalibrierungskopfs (1) beabstandet sind.

3. Zylindrischer Kalibrierungskopf (1) für das Bohren einer Welle (4) nach Anspruch 2, **dadurch gekennzeichnet, dass** die Positionen auf der Außenfläche des Kalibrierungskopfs (1) der vorderen Führungskufen (36, 37, 38) und der Nuten (20, 21, 22) derart abwechselnd sind, dass der Winkel zwischen jeder vorderen Führungskufe (36, 37, 38), der einer Nut gemäß dem Umfang des Kalibrierungskopfs folgt, einen Winkel von 60° gegenüber einer Rotation in Bezug auf die Achse (6) des Kalibrierungskopfs (1) bildet.

4. Zylindrischer Kalibrierungskopf (1) für das Bohren einer Welle (4) nach einem der Ansprüche 1 bis 3, **dadurch gekennzeichnet, dass** mindestens eine zusätzliche hintere Führungskufe (27) in Bezug auf eine vordere Führungskufe (38) axial versetzt ist.

5. Zylindrischer Kalibrierungskopf (1) für das Bohren einer Welle (4) nach einem der Ansprüche 1 bis 4, **dadurch gekennzeichnet, dass** er vier hintere Führungskufen (25, 26, 27, 25') aufweist, die auf der Außenfläche des Kopfs (1) in einer zweiten Zone (24) angeordnet sind, die die hintere Zone des Kopfs definiert, wobei sich zwei andere hintere Führungskufen (26) jeweils hinter einer vorderen Führungskufe befinden.

6. Zylindrischer Kalibrierungskopf (1) für das Bohren einer Welle (4) nach einem der Ansprüche 1 bis 5, **dadurch gekennzeichnet, dass** eine Nut eine Endbearbeitungsplatte aufweist und dass zwei Nuten jeweils eine Rohbearbeitungsplatte aufweisen.

7. Zylindrischer Kalibrierungskopf (1) für das Bohren einer Welle (4) nach Anspruch 6, **dadurch gekennzeichnet, dass** die eine der zwei hinteren Führungskufen (25, 25'), die in Bezug auf die Achse (6) des Kopfs (1) symmetrisch positioniert sind, in 30° in Bezug auf die Rohbearbeitungsplatte (30, 35) oder eine Endbearbeitungsplatte (32) positioniert ist.

8. Zylindrischer Kalibrierungskopf (1) für das Bohren einer Welle (4) nach einem der Ansprüche 1 bis 7, **dadurch gekennzeichnet, dass** die Erweiterung jeder Nut etwa bei einem Winkel von zirka 25° bis 10 % liegt.

9. Zylindrischer Kalibrierungskopf (1) für das Bohren einer Welle (4) nach einem der Ansprüche 1 bis 8, **dadurch gekennzeichnet, dass** die Länge der Nuten gemäß der Achse des Kalibrierungskopfs über 50 % der Länge des Kalibrierungskopfs beträgt.

10. Zylindrischer Kalibrierungskopf (1) für das Bohren einer Welle (4) nach einem der Ansprüche 1 bis 9, **dadurch gekennzeichnet, dass** jede Bearbeitungsplatte drei Kanten aufweist, die derart ausgelegt sein können, dass mittels der Einstellkassette eine Arbeitskante ausgewählt wird.

## Claims

1. Cylindrical calibration head (1) for drilling a shaft (4) comprising three flutes (20, 21, 22) extending along the axis of said head and uniformly distributed around the circumference so that they are separated from each other by an angle of 120° in rotation about the axis (6) of the calibration head (1), the flutes being used for evacuation of chips and passage of the lubrication during drilling, each of the flutes comprising a machining insert, the head comprises at least one front guide pad (36, 37, 38) arranged on the outside surface of the head in a zone (23) corresponding to the front end of the head (1), and a plurality of back guide pads (25, 26, 25') placed on the outside surface of said head (1) in a second zone (24) defining the back zone of said head, one (26) of back guide pads being placed behind one (37) among the or each front guide pad, along the same axis there the head is **characterised in that** the position of each machining insert is adjusted in the flute by means of an adjustment cartridge, and that two back guide pads (25, 25') among the plurality of back guide pads (25, 26, 25') being arranged symmetrically relative to each other about the axis (6) of the head (1).

2. Cylindrical calibration head (1) for drilling a shaft (4) according to claim 1, **characterised in that** it comprises three front guide pads located in a zone (23) defining a front end of the calibration head, the three pads (36, 37, 38) being arranged uniformly on the outside surface of the head (1) so that they are separated from each other by an angle of 120° in rotation about the axis (6) of the calibration head (1) .

3. Cylindrical calibration head for drilling a shaft (4) according to claim 2, **characterised in that** the positions of the front guide pads (36, 37, 38) and the flutes (20, 21, 22) on the outside surface of the calibration head (1) are alternated such that the angle between each front guide pad (36, 37, 38) following a flute along the circumference of the calibration head forms an angle of 60° in rotation about the axis (6) of the calibration head (1).

4. Cylindrical calibration head (1) for drilling a shaft (4) according to any one of claims 1 to 3, **characterised in that** at least one additional back pad (27) is axially offset from a front pad (38).

5. Cylindrical calibration head (1) for drilling a shaft (4) according to any one of claims 1 to 4, **characterised in that** it comprises four back guide pads (25, 26, 27, 25') arranged on the outside surface of said head (1) in a second zone (24) defining the back zone of the head, two more back guide pads (26) being arranged symmetrically relative to each other about the axis of the head and each of two other back guide pads (26) being placed behind a front pad.

6. Cylindrical calibration head for drilling a shaft (4) according to any one of claims 1 to 5, **characterised in that** one flute contains a finishing insert and each of two flutes contains a rough machining insert.

7. Cylindrical calibration head for drilling a shaft (4) according to claim 6, **characterised in that** one of the two back pads (25, 25') that are positioned symmetrically relative to the axis (6) of the head (1), is placed at 30° from the rough machining insert (30, 35) or a finishing insert (32).

8. Cylindrical calibration head for drilling a shaft (4) according to any one of claims 1 to 7, **characterised in that** each flute is tapered at an angle equal to approximately 25° within 10%.

9. Cylindrical calibration head for drilling a shaft (4) according to any one of claims 1 to 8, **characterised in that** the length of the flutes along the axis of the calibration head is more than 50% of the length of the calibration head.

10. Cylindrical calibration head for drilling a shaft (4) according to any one of claims 1 to 9, **characterised in that** each machining insert has three edges that can be configured so as to select a working edge by means of the adjustment cartridge.
